Europäisches Patentamt

European Patent Office

Office européen des brevets

(19)

(11) **EP 1 413 428 A1**

## (12) DEMANDE DE BREVET EUROPEEN

(43) Date de publication:
**28.04.2004 Bulletin 2004/18**

(51) Int Cl.$^7$: **B32B 17/10**, C03C 27/12

(21) Numéro de dépôt: **04002133.9**

(22) Date de dépôt: **27.04.2001**

(84) Etats contractants désignés:
**AT BE CH CY DE DK ES FI FR GB GR IE IT LI LU MC NL PT SE TR**

(30) Priorité: **03.05.2000 FR 0005617**

(62) Numéro(s) de document de la (des) demande(s) initiale(s) en application de l'article 76 CBE:
**01110481.7 / 1 151 855**

(71) Demandeur: **Saint-Gobain Glass France 92400 Courbevoie (FR)**

(72) Inventeurs:
• **Rehfeld, Marc 95600 Ezanville (FR)**

• **Vidal, Boris 33440 Luanco (Asturias) (ES)**

(74) Mandataire: **Aupetit, Muriel J. C. (FR) Saint-Gobain Recherche 39, Quai Lucien Lefranc 93300 Aubervilliers (FR)**

Remarques:
Cette demande a été déposée le 02 - 02 - 2004 comme demande divisionnaire de la demande mentionnée sous le code INID 62.

(54) **Vitrage feuilleté à propriétés de résistance mécanique et d'isolation acoustique**

(57) Vitrage feuilleté aux propriétés d'isolation acoustique et de résistance mécanique, comprenant deux feuilles de verre (10, 11) et un intercalaire (12) monocouche d'épaisseur e se présentant sous forme d'un film polymérique, l'épaisseur e de l'intercalaire étant définie en fonction d'une grandeur $J_c$ propre au matériau, définissant la valeur énergétique critique de l'intercalaire et représentative de l'énergie nécessaire à la propagation d'une fissure initialisée dans l'intercalaire.

Fig.1

EP 1 413 428 A1

**Description**

L'invention concerne un vitrage feuilleté aux propriétés d'isolation acoustique et de résistance mécanique, comprenant deux feuilles de verre et un intercalaire d'épaisseur e se présentant sous forme d'un film polymérique monocouche.

Les vitrages feuilletés sont généralement destinés à équiper des véhicules ou des bâtiments pour diminuer à l'intérieur, la perception des bruits extérieurs. Par ailleurs, ils possèdent des atouts majeurs sur le plan de leur résistance mécanique. En effet, lors d'un choc, avant la rupture du verre, l'intercalaire permet avantageusement d'absorber une partie de l'énergie par dissipation visqueuse. Le rôle de l'intercalaire est également primordial puisqu'il assure en grande partie le maintien de la structure lorsque le verre est totalement fissuré, ce qui permet grâce à l'adhérence des morceaux de verre sur le film, d'éviter la projection d'éclats de verre et par conséquent la blessure de personnes.

Le polyvinyle butyral (PVB) est couramment utilisé pour ses performances mécaniques; néanmoins, il possède des caractéristiques acoustiques médiocres. C'est pourquoi des résines spéciales sont parfois préférées pour leurs performances acoustiques améliorées.

Le choix de la résine du verre feuilleté constitue un critère essentiel d'isolation phonique du vitrage. Ce choix peut être établi grâce à une méthode de détermination de la fréquence critique du verre feuilleté et à sa comparaison avec la fréquence critique d'un barreau de verre. Une telle méthode est décrite dans le brevet EP-B-0 100 701; une résine est considérée convenable lorsqu'un barreau de 9 cm de longueur et de 3 cm de largeur constitué d'un verre feuilleté qui comprend deux feuilles de verre de 4 mm d'épaisseur réunies par une couche de ladite résine de 2 mm a une fréquence critique qui diffère au plus de 35 % de celle d'un barreau de verre ayant la même longueur et la même largeur de 4 mm d'épaisseur.

Cependant, ces résines à hautes performances acoustiques ne possèdent pas toujours les propriétés mécaniques nécessitées par leurs conditions d'emploi.

De manière à réunir propriétés à la fois acoustiques et mécaniques, le brevet EP- B- 0 763 420 propose l'association d'un film de polyvinyle butyral avec un film de résine à performances acoustiques.

Toutefois, l'association de deux films distincts conduit à un surcoût du produit et essentiellement à une augmentation du coût de production du vitrage. En effet, l'association de plusieurs couches de matériaux pour l'intercalaire ne permet pas de recycler individuellement chaque matériau du surplus produit généralement en bout de ligne de fabrication, alors que l'opération de recyclage peut être facilement mise en oeuvre, pour rentabiliser au mieux la production, lorsque l'intercalaire est monocouche.

L'invention a donc pour but de fournir un vitrage feuilleté monolithique, c'est-à-dire pour lequel l'intercalaire est monocouche, aux propriétés d'isolation acoustique et aux propriétés de résistance mécanique conformes à celles attendues sur le plan de la sécurité pour des vitrages de bâtiment ou automobile, en choisissant de manière adéquate le matériau de l'intercalaire.

A cette fin, l'invention selon un premier mode de réalisation donne une méthode d'appréciation des critères de choix du matériau et de l'épaisseur de l'intercalaire qui doit avoir une épaisseur minimale pour assurer une résistance mécanique suffisante.

Selon l'invention, le vitrage feuilleté ou le film polymérique devant servir d'intercalaire à un vitrage feuilleté est caractérisé en ce que ledit intercalaire présente au moins une épaisseur égale à $e_{ref} \times \dfrac{J_{ref}}{J_c}$ où

- $J_c$ est la valeur énergétique critique propre au matériau de l'intercalaire et représentative de l'énergie nécessaire à la propagation d'une fissure initialisée dans l'intercalaire;
- $J_{ref}$ est une valeur énergétique critique de référence qui correspond à la valeur énergétique critique d'un film en polyvinyle butyral (PVB) et égale à 35 100 J/m² pour une température de 20°C et pour une vitesse d'étirement sur le film en PVB de 100 mm/mn;
- $e_{ref}$ est une épaisseur de référence qui correspond à celle du film en PVB et égale à 0,38 mm.

Selon une caractéristique, le vitrage est satisfaisant acoustiquement lorsqu'il répond aux critères de propriétés acoustiques améliorées définis par le fait qu'un barreau de 9 cm de longueur et de 3 cm de largeur, constitué d'un verre feuilleté comprenant deux feuilles de verre de 4 mm d'épaisseur réunies par ledit intercalaire d'une épaisseur de 2 mm, ait une fréquence critique qui diffère au plus de 35 % de celle d'un barreau de verre ayant la même longueur, la même largeur et 4 mm d'épaisseur.

En outre, le procédé selon l'invention pour évaluer la résistance à la déchirure d'un film polymérique d'épaisseur $e_1$ destiné à constituer l'intercalaire d'un vitrage feuilleté est caractérisé en ce que :

- on détermine la valeur de l'énergie critique $J_c$ de l'intercalaire, valeur représentative de l'énergie nécessaire à la propagation d'une fissure initialisée dans l'intercalaire;
- on calcule la valeur d'énergie critique rapportée à l'épaisseur $\tilde{J}_c$ et définie par la relation

$$\tilde{J}c = J_c \times e_1;$$

- on compare $\tilde{J}_c$ à une valeur de référence $\tilde{J}_{ref}$ représentative d'un film de PVB d'épaisseur 0,38 mm et égale à 13,3 J/m;
- l'intercalaire répondant au critère de résistance à la déchirure lorsque

$$\tilde{J}c > \tilde{J}ref \quad .$$

Selon un second mode de réalisation, qui ne s'appuie pas sur l'épaisseur que doit avoir le film pour résister mécaniquement, l'intercalaire monocouche est caractérisé en ce que son matériau est composite, constitué en particulier d'un polymère et de fibres de renforcement noyées dans le polymère.

D'autres caractéristiques et avantages de l'invention apparaîtront à la lecture de la description qui suit en regard des dessins annexés sur lesquels :

- la figure 1 est une vue en coupe d'une vitrage feuilleté simple présentant un unique film intercalaire;
- la figure 2 illustre un dispositif expérimental pour évaluer la résistance à la déchirure de l'intercalaire;
- la figure 3 représente l'évolution de l'énergie du fond de fissure, fissure qui est réalisée dans l'intercalaire;
- la figure 4 représente la force de traction exercée sur l'intercalaire en fonction de la distance d'étirement de cet intercalaire;
- la figure 5 représente l'énergie potentielle de l'intercalaire en fonction de la distance d'étirement de cet intercalaire;
- la figure 6 illustre la reproductibilité satisfaisante d'un test de déchirure.

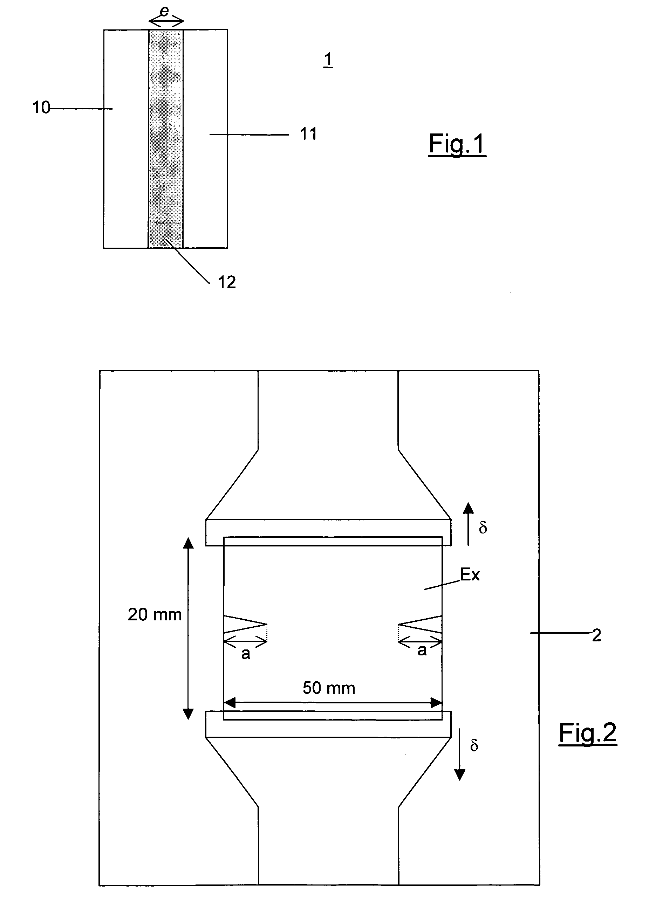

Le vitrage simple feuilleté 1 représenté sur la figure 1 comprend deux feuilles de verre 10 et 11, et un film polymérique intercalaire 12. Les feuilles de verre ont par exemple une épaisseur, respectivement, de 6 et 4 mm, tandis que l'épaisseur e de l'intercalaire peut être variable et est imposée selon le type de matériau choisi pour celui-ci.

L'épaisseur e établie pour l'intercalaire dépend en effet de la résistance à la déchirure du matériau. La résistance à la déchirure est propre à chaque matériau, elle est caractérisée par une valeur énergétique représentative de l'énergie nécessaire à la propagation d'une fissure initialisée dans le matériau. Cette énergie appelée énergie critique $J_c$ est différente pour chaque type de matériau et est indépendante de l'épaisseur du film, elle s'exprime en J/m$^2$.

La résistance à la déchirure du matériau qu'on identifiera donc directement à l'énergie critique $J_c$ n'est évaluée qu'après appréciation des performances acoustiques dudit matériau. En effet, l'invention a préférentiellement adopté de choisir en premier lieu le matériau adéquat pour répondre aux critères d'isolation acoustique, puis de tester les performances de résistance à la déchirure de ce matériau afin d'en déduire l'épaisseur e nécessaire pour répondre aux critères de résistance mécanique.

Pour parvenir aux critères de performances acoustiques, l'intercalaire doit remplir la condition de la fréquence critique énoncée dans le brevet EP-B-0 100 701.

Le principe de la mesure de la fréquence critique de l'intercalaire consiste à effectuer l'analyse des fréquences de vibration de deux barreaux soumis à un choc, l'un en verre de 9 cm de longueur et de 3 cm de largeur, et l'autre en verre feuilleté de mêmes dimensions et comprenant deux feuilles de verre de 4 mm d'épaisseur et l'intercalaire d'une épaisseur $e_1$ égale par exemple à 2 mm. Il s'agit de repérer la position des fréquences de résonance respectives des deux barreaux et de comparer entre elles les deux fréquences de résonance. Le matériau constituant l'intercalaire convient lorsque sa fréquence de résonance diffère de moins de 35 % de celle du verre.

En variante, la demande de brevet EP 0 844 075 propose une autre technique de sélection pour le choix d'un intercalaire satisfaisant acoustiquement. Il s'agit d'évaluer à l'aide d'un appareil nommé viscoanalyseur la composante élastique (ou module de cisaillement) G' et la tangente de l'angle de perte (ou facteur de perte) tanδ du matériau.

Le viscoanalyseur permet de soumettre un échantillon de matériau à des sollicitations de déformations dans des conditions précises de température et de fréquence, et ainsi d'obtenir et de traiter l'ensemble des grandeurs rhéologiques caractérisant le matériau. L'exploitation des données brutes des mesures de force, déplacement et déphasage, en fonction de la fréquence, à chaque température, permet de calculer les grandeurs du module de cisaillement G' et de la tangente de l'angle de perte tanδ. Il a été montré qu'un bon intercalaire acoustique doit posséder un facteur de perte tanδ supérieur à 0,6 et un module de cisaillement G' compris entre $1.10^6$ et $2.10^7$ N/m$^2$, dans un domaine de température compris entre 10 et 60°C et dans un domaine de fréquence compris entre 50 et 10 000 Hz.

Une fois le matériau de l'intercalaire choisi en raison de ses performances acoustiques, il s'agit de connaître sa résistance mécanique par son comportement à la déchirure. A cette fin, l'intercalaire retenu d'épaisseur $e_1$ est soumis à un test de déchirure que nous expliquerons plus loin en combinaison à une méthode de calcul de la valeur d'énergie critique $J_c$.

Après évaluation de la valeur d'énergie critique $J_c$ propre au matériau retenu, on calcule l'énergie critique rapportée à l'épaisseur $e_1$ de l'intercalaire $\tilde{J}_c$ qui est exprimée en J/m et est telle que $\tilde{J}_c = J_c \times e_1$. Cette valeur $\tilde{J}_c$ est alors comparée à une valeur de référence $\tilde{J}_{ref}$ qui correspond à un matériau répondant parfaitement aux critères de résistance mécanique sur le plan de la sécurité pour une épaisseur de référence $e_{ref}$. Le matériau de référence est du polyvinyle butyral (PVB) d'épaisseur de référence $e_{ref}$ égale à 0,38 mm.

Si le résultat de comparaison satisfait à la règle

$$\widetilde{J}c \ \geq \ \widetilde{J}_{ref} \, ,$$

l'intercalaire choisi d'épaisseur $e_1$ convient.

Dans le cas contraire, on donne à l'intercalaire choisi une épaisseur $e$ telle qu'elle soit au moins égale à $e_{ref}$ x $\dfrac{J_{ref}}{J_c}$ afin de satisfaire au critère de résistance mécanique minimale.

La résistance à la déchirure ou énergie critique $J_c$ est donnée de manière connue par une méthode énergétique fondée sur l'intégrale de Rice J qui définit l'énergie localisée en fond de fissure d'un film subissant des contraintes très intenses à l'endroit d'une fissuration. Elle s'écrit sous la forme mathématique simplifiée (1) :

$$J = -\frac{1}{e_1}\left(\frac{\partial U}{\partial a}\right),$$

pour un étirement donné $\delta$ de l'échantillon testé qui sera nommé par la suite déplacement $\delta$, et où

e$_1$ est l'épaisseur de l'échantillon
a, la taille de la fissure,
U, l'énergie potentielle de l'échantillon.

La méthode avancée ci-dessous pour le calcul de l'énergie de fond de fissure J est celle développée par Tielking.

Le dispositif expérimental tel qu'illustré à la figure 2 est le suivant :

Des essais de traction au moyen d'une machine de traction-compression 2 sont réalisés sur plusieurs échantillons, par exemple au nombre de quatre $Ex_1$ à $Ex_4$, d'un même matériau et de surface identique à 100 mm$^2$ (50 mm de longueur par 20 mm de largeur). Chaque échantillon est entaillé selon la référence 20 sur ses côtés et perpendiculairement à la force de traction, d'une longueur de fissuration a distincte pour chaque échantillon $Ex_1$ à $Ex_4$, et correspondant respectivement à 5, 8, 12 et 15 mm.

Chaque échantillon Ex est étiré perpendiculairement aux fissurations 20 à une vitesse d'étirement de 100 mm/mn et sur une longueur d'étirement ou distance $\delta$ donnée.

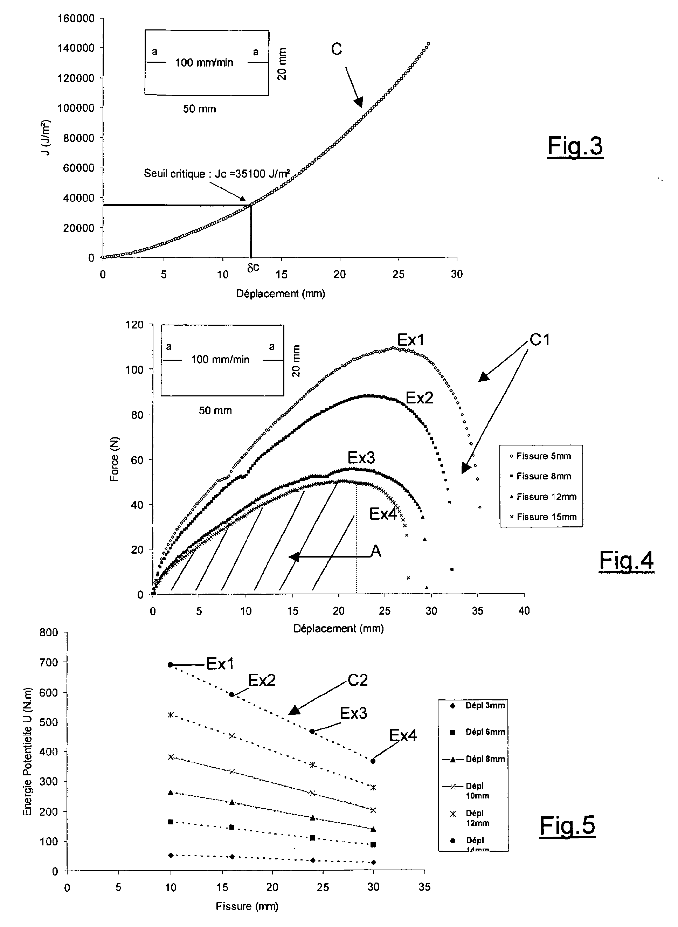

Cette méthode permet d'établir une courbe d'évolution C (figure 3) de l'énergie J de fond de fissure en fonction de l'étirement $\delta$ subi par l'échantillon, et de déterminer grâce à cette courbe l'énergie critique Jc d'initialisation de la déchirure de l'échantillon.

C'est donc à cette valeur critique Jc que le matériau se déchire et qu'il est par conséquent mécaniquement endommagé.

La courbe C est obtenue à la suite des étapes que nous expliquons ci-après. Les échantillons sont des films de polyvinyle butyral présentant une épaisseur de 0,38 mm.

En premier lieu, on trace pour chacun des échantillons $Ex_1$ à $Ex_4$ la courbe C1 (figure 4) représentative de la force de traction exercée sur l'échantillon en fonction de la distance d'étirement $\delta$ subi par ledit échantillon, distance qui va de 0 à 40 mm.

Grâce aux courbes C1 des échantillons, on déduit ensuite l'énergie potentielle U correspondante à un déplacement $\delta$ donné en fonction de la taille a d'évolution de la fissure par rapport à sa taille initiale. La mesure de l'énergie potentielle U est obtenue en calculant l'aire A, équivalente à la surface hachurée sur la figure 4, sous la courbe C1 comprise entre 0 mm et le déplacement $\delta$ donné, ici de 22 mm pour la surface hachurée et correspondant à l'échantillon $Ex_4$.

Ont été considérées huit déplacements $\delta$ de 3mm à 22 mm. On peut alors tracer pour chacun des huit déplacements une courbe C2 illustrée en figure 5, représentant l'énergie potentielle U en fonction de la taille a à laquelle la fissure a évolué.

La courbe C2 représentative de l'énergie potentielle U est une droite; par conséquent la dérivée

$$\left(\frac{\partial U}{\partial a}\right)$$

formulée dans l'équation (1) de l'énergie J est en fait la pente de la droite C2 et donc égale à une constante. En divisant cette constante par l'épaisseur $e_1$ de l'échantillon, est calculée la valeur de J.

Après calcul de chacune des pentes correspondant aux huit déplacements, on établit la courbe C (figure 3) représentative de l'énergie J en fonction du déplacement $\delta$.

A l'aide d'une caméra vidéo qui visualise la propagation de la fissure 20, on détecte pour quel déplacement $\delta_c$ la déchirure de l'échantillon commence. A l'aide de la courbe C, on en déduit à partir de ce déplacement $\delta_c$ la valeur correspondante de l'énergie critique $J_c$.

Cette méthode a été appliquée à titre d'exemple pour le film PVB satisfaisant mécaniquement et constituant le film de référence de 0,38 mm d'épaisseur. La déchirure a lieu pour un déplacement $\delta_c$ de 12mm ce qui permet de conclure à une valeur d'énergie critique $J_c$ égale à 35 100 J/m$^2$, dans des conditions expérimentales où la température est de 20°C et la vitesse d'étirement de 100 mm/mn.

Cette valeur critique $J_c$ de 35 100 J/m$^2$ pour le PVB constitue la valeur de référence $J_{ref}$ de l'énergie au-dessus de laquelle toute valeur d'énergie calculée pour un autre matériau et selon la méthode explicitée ci-dessus sera considérée correcte de façon que ce matériau soit convenable pour répondre aux critères de résistance mécanique.

Le matériau choisi satisfaisant acoustiquement est soumis au même test de résistance à la déchirure explicité ci-dessus de manière à calculer sa valeur d'énergie critique propre $J_c$. Puis est calculé comme déjà expliqué plus haut son énergie critique rapportée à son épaisseur $\jmath_c$ ($J_c$ x $e_1$) afin d'être comparée à celle de référence du PVB, soit $\jmath_{ref}$ = $J_{ref}$ x 0,38 = 35 100 x 0,38 = 13,3 J/m, et d'en déduire l'épaisseur adéquate $e$ lorsque l'épaisseur $e_1$ est insuffisante.

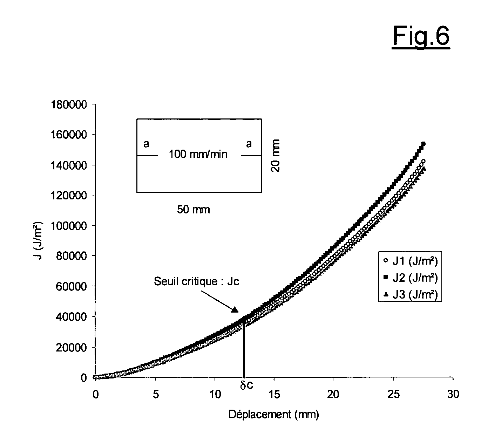

Notons que la méthode de Tielking sera préférée à d'autres méthodes, telles que celle de Hashemi, pour sa facilité de mise en oeuvre. En outre, elle est fiable puisque reproductible avec un écart moyen de 8% au niveau de l'évolution globale de l'énergie J en fonction du déplacement. La figure 6 illustre une série de trois tests similaires à celui développé ci-dessus sur l'évolution de l'énergie J en fonction du déplacement $\delta$.

Selon un second mode de réalisation, qui ne s'appuie pas obligatoirement sur l'épaisseur que doit avoir le film pour résister mécaniquement, l'intercalaire monocouche testé correct acoustiquement résiste à la déchirure en raison de la composition de son matériau, matériau qui est composite et constitué en particulier d'un polymère et de fibres de renforcement noyées dans le polymère telles que des fibres de verre.

## Revendications

1. Vitrage feuilleté (1) comprenant deux feuilles de verre (10, 11) et un intercalaire (12) en un matériau adéquat pour répondre aux critères d'isolation acoustique, **caractérisé en ce que** l'intercalaire présente une épaisseur e adéquate et augmentée par rapport à une épaisseur $e_1$ de l'intercalaire insuffisante, de façon à satisfaire au critère de résistance mécanique minimale.

2. Vitrage feuilleté selon la revendication 1, **caractérisé en ce que** l'épaisseur $e$ de l'intercalaire est au moins égale à $e_{ref}$ x $\dfrac{J_{ref}}{J_c}$ où,

   - $J_c$ est la valeur énergétique critique propre au matériau de l'intercalaire et représentative de l'énergie nécessaire à la propagation d'une fissure initialisée dans l'intercalaire;
   - $J_{ref}$ et $e_{ref}$ correspondent respectivement à une énergie critique de référence et une épaisseur de référence d'un matériau répondant parfaitement aux critères de résistance mécanique.

3. Vitrage feuilleté selon la revendication 2, **caractérisé en ce que** le matériau de référence est du polyvinylbutyral.

4. Vitrage feuilleté selon l'une des revendications 1 à 3, **caractérisé en ce que** l'intercalaire répond aux critères de propriétés acoustiques améliorées définis par le fait qu'un barreau de 9 cm de longueur et de 3 cm de largeur, constitué d'un verre feuilleté comprenant deux feuilles de verre de 4 mm d'épaisseur réunies par ledit intercalaire d'une épaisseur de 2 mm, ait une fréquence critique qui diffère au plus de 35 % de celle d'un barreau de verre ayant la même longueur, la même largeur et 4 mm d'épaisseur.

5. Vitrage feuilleté selon l'une des revendications 1 à 3, **caractérisé en ce que** l'intercalaire possède un facteur de perte tan$\delta$ supérieur à 0,6 et un module de cisaillement G' compris entre $1.10^6$ et $2.10^7$ N/m$^2$, dans un domaine de température compris entre 10 et 60°C et dans un domaine de fréquence compris entre 50 et 10 000 Hz.

6. Film polymérique en un matériau adéquat pour répondre aux critères d'isolation acoustique, destiné à servir d'intercalaire à un vitrage feuilleté, **caractérisé en ce qu'**il présente une épaisseur e adéquate et augmentée par rapport à une épaisseur $e_1$ de l'intercalaire insuffisante, de façon à satisfaire au critère de résistance mécanique minimale.

7. Film polymérique selon la revendication 6, **caractérisé en ce que** l'épaisseur e est au moins égale à $e_{ref}$ x $\dfrac{J_{ref}}{J_c}$ où,

   - $J_c$ est la valeur énergétique critique propre au matériau de l'intercalaire et représentative de l'énergie nécessaire à la propagation d'une fissure initialisée dans l'intercalaire;
   - $J_{ref}$ et $e_{ref}$ correspondent respectivement à une énergie critique de référence et une épaisseur de référence d'un matériau répondant parfaitement aux critères de résistance mécanique.

8. Film polymérique selon la revendication 5 ou 6, **caractérisé en ce que** le matériau de référence est du polyvinylbutyral.

9. Film polymérique selon l'une des revendications 6 à 8, **caractérisé en ce que** par le fait qu'un barreau de 9 cm de longueur et de 3 cm de largeur, constitué d'un verre feuilleté comprenant deux feuilles de verre de 4 mm d'épaisseur réunies par ledit intercalaire d'une épaisseur de 2 mm, ait une fréquence critique qui diffère au plus de 35 % de celle d'un barreau de verre ayant la même longueur, la même largeur et 4 mm d'épaisseur.

**10.** Film polymérique selon l'une des revendications 6 à 8, **caractérisé en ce que** l'intercalaire possède un facteur de perte tan$\delta$ supérieur à 0,6 et un module de cisaillement G' compris entre $1.10^6$ et $2.10^7$ N/m$^2$, dans un domaine de température compris entre 10 et 60°C et dans un domaine de fréquence compris entre 50 et 10 000 Hz.

Fig.1

Fig.2

Fig.3

Fig.4

Fig.5

Fig.6

**Office européen des brevets**

## RAPPORT DE RECHERCHE EUROPEENNE

Numéro de la demande

EP 04 00 2133

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | EP 0 100 701 A (SAINT GOBAIN VITRAGE) 15 février 1984 (1984-02-15) * le document en entier * | 1 | B32B17/10 C03C27/12 |
| D,A | EP 0 763 420 A (SAINT GOBAIN VITRAGE) 19 mars 1997 (1997-03-19) * le document en entier * | 1 | |
| A | PATENT ABSTRACTS OF JAPAN vol. 015, no. 328 (C-0860), 21 août 1991 (1991-08-21) & JP 03 124733 A (NIPPON MONSANTO KK), 28 mai 1991 (1991-05-28) * abrégé * | 1 | |
| A | PATENT ABSTRACTS OF JAPAN vol. 015, no. 325 (M-1148), 19 août 1991 (1991-08-19) & JP 03 124440 A (NIPPON MONSANTO KK), 28 mai 1991 (1991-05-28) * abrégé * | 1 | |

DOMAINES TECHNIQUES RECHERCHES (Int.Cl.7)

B32B
C03C

Le présent rapport a été établi pour toutes les revendications

| Lieu de la recherche | Date d'achèvement de la recherche | Examinateur |
|---|---|---|
| La Haye | 19 février 2004 | Van Belleghem, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 413 428 A1**

## ANNEXE AU RAPPORT DE RECHERCHE EUROPEENNE
## RELATIF A LA DEMANDE DE BREVET EUROPEEN NO.

EP 04 00 2133

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-02-2004

| Document brevet cité au rapport de recherche | | Date de publication | Membre(s) de la famille de brevet(s) | | Date de publication |
|---|---|---|---|---|---|
| EP 0100701 | A | 15-02-1984 | FR | 2529609 A1 | 06-01-1984 |
| | | | AT | 36576 T | 15-09-1988 |
| | | | CA | 1240560 A1 | 16-08-1988 |
| | | | DE | 3377727 D1 | 22-09-1988 |
| | | | EP | 0100701 A2 | 15-02-1984 |
| | | | ES | 281452 U | 16-12-1985 |
| | | | ES | 284676 U | 01-07-1985 |
| | | | JP | 1895085 C | 26-12-1994 |
| | | | JP | 4042346 B | 13-07-1992 |
| | | | JP | 59064549 A | 12-04-1984 |
| | | | US | 4614676 A | 30-09-1986 |
| EP 0763420 | A | 19-03-1997 | FR | 2738772 A1 | 21-03-1997 |
| | | | BR | 9603768 A | 02-06-1998 |
| | | | DE | 69606939 D1 | 13-04-2000 |
| | | | DE | 69606939 T2 | 02-11-2000 |
| | | | EP | 0763420 A1 | 19-03-1997 |
| | | | ES | 2145402 T3 | 01-07-2000 |
| | | | JP | 3294508 B2 | 24-06-2002 |
| | | | JP | 9165235 A | 24-06-1997 |
| | | | PT | 763420 T | 31-08-2000 |
| | | | US | 5773102 A | 30-06-1998 |
| JP 03124733 | A | 28-05-1991 | AUCUN | | |
| JP 03124440 | A | 28-05-1991 | AUCUN | | |

EPO FORM P0460

Pour tout renseignement concernant cette annexe : voir Journal Officiel de l'Office européen des brevets, No.12/82